# EUROPEAN PATENT APPLICATION

(11) **EP 4 510 230 A1**
(43) Date of publication of application: **19.02.2025**
(21) Application number: 22960270.1
(22) Date of filing: 30.09.2022
(51) Int. Cl.: H01M 4/525

(54) **POSITIVE ELECTRODE ACTIVE MATERIAL, PREPARATION METHOD THEREFOR, SECONDARY BATTERY, AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); WU, Qi, Ningde, Fujian 352100 (CN); CHEN, Qiang, Ningde, Fujian 352100 (CN); SHEN, Chongheng, Ningde, Fujian 352100 (CN); FAN, Jingpeng, Ningde, Fujian 352100 (CN); ZHAO, Dong, Ningde, Fujian 352100 (CN); LIU, Na, Ningde, Fujian 352100 (CN)
(74) Representative: Frick, Robert
(86) International application number: PCT/CN2022/123195
(87) International publication number: WO 2024/065647

(57) **Abstract**

The present application relates to a positive electrode active material comprising a first positive electrode active material, which comprises a substrate of formula (I), wherein the substrate is doped with an element M1: Li_{A1}[Ni_{X1}Co_{Y1}Mn_{Z1}]O₂ (I); and a second positive electrode active material, which comprises a substrate of formula (II), wherein the substrate is doped with an element M2: Li_{A2}[Ni_{X2}Co_{Y2}Mn_{Z2}]O₂ (II); the average particle size Dv₅₀ of the first positive electrode active material is greater than that of the second positive electrode active material, wherein 0 < X2 - X1 ≤ 0.4, and optionally 0 < X2 - X1 ≤ 0.1. The present application further relates to a method for preparing the positive electrode active material, a secondary battery, and a power consuming device.

## Description

### Technical Field

The present application relates to the technical field of secondary batteries, in particular to a positive electrode active material, a preparation method therefor, a secondary battery, and a power consuming device.

### Background Art

In recent years, with the increasing application range, secondary batteries are widely used in energy storage power systems such as hydraulic power, thermal power, wind power and solar power stations, as well as many fields such as electric tools, electric bicycles, electric motorcycles, electric vehicles, military equipment, and aerospace. Due to the great development of secondary batteries, higher requirements have also been placed on the secondary batteries in terms of energy density, cycling performance, safety performance, etc. In addition, since the selection of a positive electrode active material is increasingly limited, a high-nickel positive electrode active material is considered to be the best choice to meet the requirement of high energy density.

However, with the continuous increase of nickel content, the structural stability thereof becomes worse and worse. Coating, doping, etc., are relatively effective means to improve the rate performance, cycling performance and other performance of a material at present. However, all the existing methods will lead to different degrees of damage to the performance of a secondary battery. For example, the secondary battery will have a lower gram capacity, poorer cycling performance, etc. Therefore, the existing coated or doped positive electrode materials still need to be improved.

### Summary of the Invention

The present application has been made in view of the above-mentioned problems, and an objective of the present application is to provide a positive electrode active material, such that a secondary battery containing same has a high volume energy density, and good cycling performance and safety performance.

In order to achieve the above objective, the present application provides a positive electrode active material, a preparation method therefor, a secondary battery, and a power consuming device.

A first aspect of the present application provides a positive electrode active material, comprising:
a first positive electrode active material comprising a substrate of formula (I), wherein the substrate is doped with an element M1:

   Li_{A1}[Ni_{X1}Co_{Y1}Mn_{Z1}]O₂ (I),
in formula (I), 0.5 ≤ X1 < 1, 0 ≤ Y1 < 0.5, 0 ≤ Z1 < 0.5, 0.9 < A1 < 1.2, and X1 + Y1 + Z1 = 1, the element M1 is selected from at least one of Ti, Zr, Al, Sb, W, Sr, Nb, Mo, Ca, K, Na, Mg, Si, Te, Cr, V, and Y; and
a second positive electrode active material comprising a substrate of formula (II), wherein the substrate is doped with an element M2:

   Li_{A2}[Ni_{X2}Co_{Y2}Mn_{Z2}]O₂ (II),
in formula (II), 0.5 ≤ X2 < 1, 0 ≤ Y2 < 0.5, 0 ≤ Z2 < 0.5, 0.9 < A2 < 1.2, and X2 + Y2 + Z2 = 1, the element M2 is selected from at least one of Ti, Zr, Al, Sb, W, Sr, Nb, Mo, Ca, K, Na, Mg, Si, Te, Cr, V, and Y;
the average particle size Dv₅₀ of the first positive electrode active material is greater than that of the second positive electrode active material, wherein 0 < X2 - X1 ≤ 0.4, and optionally 0 < X2 - X1 ≤ 0.1.

Therefore, according to the present application, the first positive electrode active material with a greater average particle size Dv₅₀ is combined with the second positive electrode active material with a smaller average particle size Dv₅₀, such that a positive electrode plate containing the positive electrode active material has a high compaction density, thereby obviously improving the volume energy density of the secondary battery; in addition, when the Ni content of the second positive electrode active material substrate is higher than the Ni content of the first positive electrode active material substrate and the Ni content difference of the two is within the range, the cycling performance and safety performance of the secondary battery can be improved while ensuring the capacity of the secondary battery.

In any embodiment, 0.9 ≤ X2 < 1. When 0.9 ≤ X2 < 1, the energy density of the secondary battery can be further improved.

In any embodiment, the weight ratio of the first positive electrode active material to the second positive electrode active material is above 5 : 5, and optionally 6 : 4 - 9 : 1. When the weight ratio of the first positive electrode active material to the second positive electrode active material is within the given range, the compaction density of the positive electrode plate can be further increased, thereby further increasing the volume energy density of the secondary battery.

In any embodiment, the first positive electrode active material is a secondary particle, and the volume particle size distribution span (Dv₉₀ - Dv₁₀)/Dv₅₀ ≥ 0.5, and optionally (Dv₉₀ - Dv₁₀)/Dv₅₀ ≥ 1.0.

In any embodiment, the first positive electrode active material has an average particle size Dv₅₀ of 6 - 20 µm.

When the average particle size Dv₅₀ and volume particle size distribution span of the first positive electrode active material are within the given range, the first positive electrode active material has a higher gram capacity; and when the first positive electrode active material is combined with the second positive electrode active material, the compaction density of the positive electrode plate can further be increased.

In any embodiment, the second positive electrode active material is a secondary particle and/or a primary particle, and optionally a primary particle, the volume particle size distribution span (Dv₉₀ - Dv₁₀)/Dv₅₀ ≥ 0.5, and optionally (Dv₉₀ - Dv₁₀)/Dv₅₀ ≥ 1.0.

In any embodiment, the second positive electrode active material has an average particle size Dv₅₀ of 2 - 5 µm.

When the average particle size Dv₅₀ and volume particle size distribution span of the second positive electrode active material are within the given range, the second positive electrode active material has a higher gram capacity, which is conducive to sintering same into the primary particle, and has good cycling performance and safety performance; and when the second positive electrode active material is combined with the first positive electrode active material, the compaction density of the positive electrode plate can further be increased.

In any embodiment, in the first positive electrode active material, the doping amount of the element M1 is 500 - 7000 ppm, and optionally 1000 - 5000 ppm, based on the total weight of the first positive electrode active material. When the first positive electrode active material is doped with the element M1 and the doping amount of the element M1 is within the given range, the stability of a bulk phase structure of the secondary particle can be further improved.

In any embodiment, in the second positive electrode active material, the doping amount of the element M2 is 500 - 7000 ppm, and optionally 1000 - 5000 ppm, based on the total weight of the second positive electrode active material. When the second positive electrode active material is doped with the element M2 and the doping amount of the element M2 is within the given range, the stability of a bulk phase structure of the second positive electrode active material can be further improved.

In any embodiment, the surface of the first positive electrode active material also has a coating layer, the coating layer contains an element N1, wherein the element N1 is selected from at least one of Al, Co, Mn, B, La, Sr, P, F, Zr, Ti, and W. The coating layer containing the element N1 is provided on the surface of the first positive electrode active material, which can further improve the interface stability of the secondary particle and reduce the side reaction between the secondary particle and an electrolyte solution.

In any embodiment, the coating amount of the element N1 is 500 - 20000 ppm, and optionally 1000 - 15000 ppm, based on the total weight of the first positive electrode active material. When the coating amount of the element N1 is within the given range, the interface stability of the first positive electrode active material can be further improved without affecting other properties of the first positive electrode active material.

In any embodiment, the surface of the second positive electrode active material also has a coating layer, the coating layer contains an element N2, wherein the element N2 is selected from at least one of Al, Co, Mn, B, La, Sr, P, F, Zr, Ti, and W. The coating layer containing the element N2 is provided on the surface of the second positive electrode active material, which can further improve the interface stability of the second positive electrode active material and reduce the side reaction between the second positive electrode active material and the electrolyte solution.

In any embodiment, the coating amount of the element N2 is 500 - 20000 ppm, and optionally 1000 - 15000 ppm, based on the total weight of the second positive electrode active material. When the coating amount of the element N2 is within the given range, the interface stability of the second positive electrode active material can be further improved without affecting other properties of the second positive electrode active material.

A second aspect of the present application further provides a method for preparing a positive electrode active material, comprising the steps of:
step A: preparation of a first positive electrode active material, comprising:
   step A1: mixing a lithium salt, a ternary precursor of a first positive electrode active material and a compound containing an element M1, and sintering same to obtain the first positive electrode active material;
step B: preparation of a second positive electrode active material, comprising:
step B1: mixing a lithium salt, a ternary precursor of a second positive electrode active material and a compound containing an element M2, and sintering same to obtain the second positive electrode active material; and
step C: mixing the first positive electrode active material and the second positive electrode active material to obtain the positive electrode active material;
wherein the first positive electrode active material comprises a substrate of formula (I), and the substrate is doped with the element M1:

   Li_{A1}[Ni_{X1}Ci_{Y1}Mn_{Z1}]O₂ (I),
in formula (I), 0.5 ≤ X1 < 1, 0 ≤ Y1 < 0.5, 0 ≤ Z1 < 0.5, 0.9 < A1 < 1.2, and X1 + Y1 + Z1 = 1, the element M1 is selected from at least one of Ti, Zr, Al, Sb, W, Sr, Nb, Mo, Ca, K, Na, Mg, Si, Te, Cr, V, and Y;
the second positive electrode active material comprises a substrate of formula (II), and the substrate is doped with an element M2:

   Li_{A2}[Ni_{X2}Co_{Y2}Mn_{Z2}]O₂ (II),
in formula (II), 0.5 ≤ X2 < 1, 0 ≤ Y2 < 0.5, 0 ≤ Z2 < 0.5, 0.9 < A2 < 1.2, and X2 + Y2 + Z2 = 1, the element M2 is selected from at least one of Ti, Zr, Al, Sb, W, Sr, Nb, Mo, Ca, K, Na, Mg, Si, Te, Cr, V, and Y;
the average particle size Dv₅₀ of the first positive electrode active material is greater than that of the second positive electrode active material, wherein 0 < X2 - X1 ≤ 0.4, and optionally 0 < X2 - X1 ≤ 0.1.

Therefore, a positive electrode active material with a stable bulk phase structure, an excellent material interface stability and a higher capacity can be synthesized by using the method of the present application.

In any embodiment, in the step A1, the sintering is carried out at a temperature of 700 - 950°C under an atmosphere of air or O₂ for 10 - 20 h. By using this primary sintering process, the first positive electrode active material with a good crystal structure can be sintered, and the uniform doping of the element M1 can be effectively performed.

In any embodiment, in the step B1, the sintering is carried out at a temperature of 750 - 1000°C under an atmosphere of air or O₂ for 10 - 20 h. By using this primary sintering process, the second positive electrode active material with a good crystal structure can be sintered, and the uniform doping of the element M2 can be effectively performed.

In any embodiment, the step A further comprises:
step A2: mixing the first positive electrode active material obtained in the step Al with a compound containing N1, and sintering same to form a coating layer containing the element N1 on the surface of the first positive electrode active material.

In any embodiment, in the step A2, the sintering is carried out at a temperature of 250 - 700°C under an atmosphere of air or O₂ for 5 - 15 h.

By using this coating and sintering process, part of the element N1 can effectively react with the impurity lithium on the surface of the first positive electrode active material, and the content of the impurity lithium on the surface of the material can be reduced; the coating layer containing the element N1 can also be firmly and uniformly coated on the surface of the first positive electrode active material, which greatly reduces the side reaction between the first positive electrode active material and the electrolyte solution.

In any embodiment, the step B further comprises:
step B2: mixing the second positive electrode active material obtained in the step B1 with a compound containing N2, and sintering same to form a coating layer containing the element N2 on the surface of the second positive electrode active material.

In any embodiment, in the step B2, the sintering is carried out at a temperature of 250 - 700°C under an atmosphere of air or O₂ for 5 - 15 h.

By using this coating and sintering process, part of the element N2 can effectively react with the impurity lithium on the surface of the second positive electrode active material, and the content of the impurity lithium on the surface of the material can be reduced; the coating layer containing the element N2 can also be firmly and uniformly coated on the surface of the second positive electrode active material, which greatly reduces the side reaction between the second positive electrode active material and the electrolyte solution.

A third aspect of the present application provides a secondary battery, comprising a positive electrode active material of the first aspect of the present application or a positive electrode active material prepared by a method of the second aspect of the present application.

A fourth aspect of the present application provides a power consuming device, comprising a secondary battery of the third aspect of the present application.

The power consuming device of the present application comprises the secondary battery provided by the present application, and thus has at least the same advantages as the secondary battery.

### Brief Description of the Drawings

Fig. 1 is a scanning electron microscope (SEM) image of the positive electrode active material prepared in Example 1-1 of the present application.
Fig. 2 is an initial charge/discharge curve of a button battery made of the positive electrode active material prepared in Example 1-1 of the present application.
Fig. 3 is a cycle comparison curve at 25°C of full batteries made of the positive electrode active materials prepared in Example 1-1 and Comparative example 2-1 of the present application.
Fig. 4 is a comparison curve of storage expansion at 70°C of full batteries made of the positive electrode active materials prepared in Example 1-1 and Comparative example 2-1 of the present application.
Fig. 5 is a schematic diagram of a battery cell according to an embodiment of the present application.
Fig. 6 is an exploded view of a battery cell according to an embodiment of the present application as shown in Fig. 5.
Fig. 7 is a schematic diagram of a battery module according to an embodiment of the present application.
Fig. 8 is a schematic diagram of a battery pack according to an embodiment of the present application.
Fig. 9 is an exploded view of a battery pack according to the embodiment of the present application as shown in Fig. 8.
Fig. 10 is a schematic diagram of a power consuming device using a secondary battery according to an embodiment of the present application as a power source.

Description of reference signs:
1 - battery pack; 2 - upper box body; 3 - lower box body; 4 - battery module; 5 - battery cell; 51 - housing; 52 - electrode assembly; 53 - top cover assembly

### Detailed Description of Embodiments

Hereinafter, embodiments of a positive electrode active material, a preparation method therefor, a secondary battery, and a power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further include step (c)" indicates that step (c) may be added to the method in any order, e.g., the method may include steps (a), (b) and (c), steps (a), (c) and (b), or steps (c), (a) and (b).

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

An existing positive electrode active material is usually a single secondary particle material (with a greater particle size) or a single primary particle material (with a smaller particle size), which makes the compaction density of the positive electrode plate low, so the volume energy density of the positive electrode plate needs to be further increased; in addition, a secondary particle positive electrode active material with a greater particle size has an ordinary cycling performance, and poor storage and safety performances, while a primary particle single-crystal positive electrode active material has a low capacity and a poor rate performance.

The present application provides a particle-graded positive electrode active material, which can significantly increase the compaction density of the positive electrode plate, thereby increasing its volume energy density, and can effectively improve the cycling and safety performances of the secondary battery.

### [Positive electrode active material]

An embodiment of the present application proposes a positive electrode active material, comprising:
a first positive electrode active material comprising a substrate of formula (I), wherein the substrate is doped with an element M1:

   Li_{A1}[Ni_{X1}Co_{Y1}Mn_{Z1}]O₂, (I),
in formula (I), 0.5 ≤ X1 < 1, 0 ≤ Y1 < 0.5, 0 ≤ Z1 < 0.5, 0.9 < Al < 1.2, and X1 + Y1 + Z1 = 1, the element M1 is selected from at least one of Ti, Zr, Al, Sb, W, Sr, Nb, Mo, Ca, K, Na, Mg, Si, Te, Cr, V, and Y; and
a second positive electrode active material comprising a substrate of formula (II), wherein the substrate is doped with an element M2:

   Li_{A2}[Ni_{X2}Co_{Y2}Mn_{Z2}]O₂, (II),
in formula (II), 0.5 ≤ X2 < 1, 0 ≤ Y2 < 0.5, 0 ≤ Z2 < 0.5, 0.9 < A2 < 1.2, and X2 + Y2 + Z2 = 1, the element M2 is selected from at least one of Ti, Zr, Al, Sb, W, Sr, Nb, Mo, Ca, K, Na, Mg, Si, Te, Cr, V, and Y;
the average particle size Dv₅₀ of the first positive electrode active material is greater than that of the second positive electrode active material, wherein 0 < X2 - X1 ≤ 0.4, and optionally 0 < X2 - X1 ≤ 0.1.

Although the mechanism is not yet clear, the applicant has unexpectedly discovered that according to the present application, the first positive electrode active material with a greater average particle size Dv₅₀ is combined with the second positive electrode active material with a smaller average particle size Dv₅₀, such that a positive electrode plate containing the positive electrode active material has a high compaction density, thereby obviously improving the volume energy density of the secondary battery. In addition, in the case of the same Ni content and the first and second positive electrode active materials both being a primary particle or a secondary particle, the capacity of a positive electrode active material with a smaller average particle size Dv₅₀ is obviously higher than that of a positive electrode active material with a greater average particle size Dv₅₀, but the cycling life and safety performance of secondary batteries containing the positive electrode active material with a smaller average particle size Dv₅₀ are worse than those containing the positive electrode active material with a greater average particle size Dv₅₀. Therefore, when the Ni content of the second positive electrode active material with a smaller average particle size Dv₅₀ is higher than that of the first positive electrode active material with a greater average particle size Dv₅₀ and the Ni content difference of the two is within the range, the cycling performance and safety performance of the secondary battery can be improved while ensuring the capacity of the secondary battery.

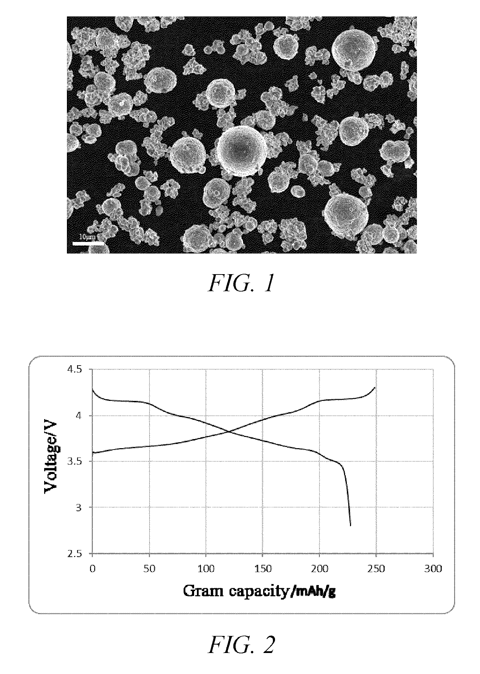

Fig. 1 shows a scanning electron microscope image of the positive electrode active material prepared in Example 1-1. It can be seen from Fig. 1 that the first positive electrode active material with a greater average particle size Dv₅₀ and the second positive electrode active material with a smaller average particle size Dv₅₀ are uniformly dispersed.

In some embodiments, the molecular formula of the first positive electrode active material is:

Liₐ₁[Niₓ₁Co_{y1}Mn_{z1}M1_{b1}]O₂ (I'),

in formula (I), 0.5 ≤ x1 < 1, 0 ≤ y1 < 0.5, 0 ≤ z1 < 0.5, 0.9 < a1 < 1.2, 0 < b1 < 0.2, and x1 + y1 + z1 + b1 = 1; and
the molecular formula of the second positive electrode active material is:

   Liₐ₂[Niₓ₂Co_{y2}Mn_{z2}M2_{b2}]O₂ (II'),
in formula (II), 0.5 ≤ x2 < 1, 0 ≤ y2 < 0.5, 0 ≤ z2 < 0.5, 0.9 < a2 < 1.2, 0 < b2 < 0.2, and x2 + y2 + z2 + b2 = 1.

In some embodiments, 0.9 ≤ X2 < 1.

When 0.9 ≤ X2 < 1, the energy density of the secondary battery can be further improved.

In some embodiments, the weight ratio of the first positive electrode active material to the second positive electrode active material is above 5 : 5, and optionally 6 : 4 - 9 : 1.

When the weight ratio of the first positive electrode active material to the second positive electrode active material is within the given range, the compaction density of the positive electrode plate can be further increased, thereby further increasing the volume energy density of the secondary battery.

In some embodiments, the first positive electrode active material is a secondary particle, and the volume particle size distribution span (Dv₉₀ - Dv₁₀)/Dv₅₀ ≥ 0.5, and optionally (Dv₉₀ - Dv₁₀)/Dv₅₀ ≥ 1.0.

In some embodiments, the first positive electrode active material has an average particle size Dv₅₀ of 6 - 20 µm.

When the average particle size Dv₅₀ and volume particle size distribution span of the first positive electrode active material are within the given range, the first positive electrode active material has a higher gram capacity; and when the first positive electrode active material is combined with the second positive electrode active material, the compaction density of the positive electrode plate can further be increased.

In some embodiments, the second positive electrode active material is a secondary particle and/or a primary particle, and optionally a primary particle, the volume particle size distribution span (Dv₉₀ - Dv₁₀)/Dv₅₀ ≥ 0.5, and optionally (Dv₉₀ - Dv₁₀)/Dv₅₀ ≥ 1.0.

In some embodiments, the second positive electrode active material has an average particle size Dv₅₀ of 2 - 5 µm.

When the average particle size Dv₅₀ and volume particle size distribution span of the second positive electrode active material are within the given range, the second positive electrode active material has a higher gram capacity, which is conducive to sintering same into the primary particle, and has good cycling performance and safety performance; and when the second positive electrode active material is combined with the first positive electrode active material, the compaction density of the positive electrode plate can further be increased.

It should be noted that, secondary particles have a meaning well-known in the art. A secondary particle refers to a particle in an agglomerated state formed by the aggregation of two or more primary particles. A primary particle has a meaning well-known in the art. A primary particle refers to a particle that does not form an agglomerated state.

In the present application, the volume distribution particle size Dv₁₀, Dv₅₀, and Dv₉₀ of the particles are well-known concepts in the art. Specifically, Dv₁₀ refers to a particle size, which is measured from small particle size and reaches 10% of cumulative volume in the particle size distribution of powder particles based on volume, usually in µm. Dv₅₀ refers to a particle size, which is measured from small particle size and reaches 50% of cumulative volume in the particle size distribution of powder particles based on volume. Dv₉₀ refers to a particle size, which is measured from small particle size and reaches 90% of cumulative volume in the particle size distribution of powder particles based on volume. The volume distribution particle size Dv₁₀, Dv₅₀, and Dv₉₀ of the particles can be tested by a method well known in the art. As an example, a device of Malvern 3000 can be used for test by referring to the particle size distribution laser diffraction method of GB/T 19077-2016/ISO 13320:2009.

In some embodiments, in the first positive electrode active material, the doping amount of the element M1 is 500 - 7000 ppm, and optionally 1000 - 5000 ppm, based on the total weight of the first positive electrode active material.

When the first positive electrode active material is doped with the element M1 and the doping amount of the element M1 is within the given range, the stability of a bulk phase structure of the secondary particle can be further improved.

In some embodiments, in the second positive electrode active material, the amount of the element M2 is 500 - 7000 ppm, and optionally 1000 - 5000 ppm, based on the total weight of the second positive electrode active material.

When the second positive electrode active material is doped with the element M2 and the doping amount of the element M2 is within the given range, the stability of a bulk phase structure of the second positive electrode active material can be further improved.

In some embodiments, the surface of the first positive electrode active material also has a coating layer, the coating layer contains an element N1, wherein the element N1 is selected from at least one of Al, Co, Mn, B, La, Sr, P, F, Zr, Ti, and W.

The coating layer containing the element N1 is provided on the surface of the first positive electrode active material, which can further improve the interface stability of the secondary particle and reduce the side reaction between the secondary particle and an electrolyte solution.

In some embodiments, the coating amount of the element N1 is 500 - 20000 ppm, and optionally 1000 - 15000 ppm, based on the total weight of the first positive electrode active material.

When the coating amount of the element N1 is within the given range, the interface stability of the first positive electrode active material can be further improved without affecting other properties of the first positive electrode active material.

In some embodiments, the surface of the second positive electrode active material also has a coating layer, the coating layer contains an element N2, wherein the element N2 is selected from at least one of Al, Co, Mn, B, La, Sr, P, F, Zr, Ti, and W.

The coating layer containing the element N2 is provided on the surface of the second positive electrode active material, which can further improve the interface stability of the second positive electrode active material and reduce the side reaction between the second positive electrode active material and the electrolyte solution.

In some embodiments, the coating amount of the element N2 is 500 - 20000 ppm, and optionally 1000 - 15000 ppm, based on the total weight of the second positive electrode active material.

When the coating amount of the element N2 is within the given range, the interface stability of the second positive electrode active material can be further improved without affecting other properties of the second positive electrode active material.

An embodiment of the present application proposes a method for preparing a positive electrode active material, comprising the steps of:
step A: preparation of a first positive electrode active material, comprising:

   step A1: mixing a lithium salt, a ternary precursor of a first positive electrode active material and a compound containing an element M1, and sintering same to obtain the first positive electrode active material;
step B: preparation of a second positive electrode active material, comprising:
   step B1: mixing a lithium salt, a ternary precursor of a second positive electrode active material and a compound containing an element M2, and sintering same to obtain the second positive electrode active material; and
step C: mixing the first positive electrode active material and the second positive electrode active material to obtain the positive electrode active material;
wherein the first positive electrode active material comprises a substrate of formula (I), and the substrate is doped with the element M1:

   Li_{A1}[Ni_{X1}Co_{Y1}Mn_{Z1}]O₂ (I),
in formula (I), 0.5 ≤ X1 < 1, 0 ≤ Y1 <0.5, 0 ≤ Z1 < 0.5, 0.9 < A1 < 1.2, and X1 + Y1 + Z1 = 1, the element M1 is selected from at least one of Ti, Zr, Al, Sb, W, Sr, Nb, Mo, Ca, K, Na, Mg, Si, Te, Cr, V, and Y;
the second positive electrode active material comprises a substrate of formula (II), and the substrate is doped with an element M2:

   Li_{A2}[Ni_{X2}Co_{Y2}Mn_{Z2}]O₂ (II),
in formula (II), 0.5 ≤ X2 < 1, 0 ≤ Y2 < 0.5, 0 ≤ Z2 < 0.5, 0.9 < A2 < 1.2, and X2 + Y2 + Z2 = 1, the element M2 is selected from at least one of Ti, Zr, Al, Sb, W, Sr, Nb, Mo, Ca, K, Na, Mg, Si, Te, Cr, V, and Y;
the average particle size Dv₅₀ of the first positive electrode active material is greater than that of the second positive electrode active material, wherein 0 < X2 - X1 ≤ 0.4, and optionally 0 < X2 - X1 ≤ 0.1.

Therefore, a positive electrode active material with a stable bulk phase structure, an excellent material interface stability and a higher capacity can be synthesized by using the method of the present application.

In some embodiments, in step A1, the lithium salt is one or both of lithium carbonate and lithium hydroxide; the ternary precursor of the first positive electrode active material is [Ni_{X1'}Co_{Y1'}Mn_{Z1'}](OH)₂, wherein 0.5 ≤ X1' < 1, 0 ≤ Y1' < 0.5, 0 ≤ Z1' < 0.5, and X1' + Y1' + Z1' = 1; and the compound containing the element M1 is one or more of sulfates, nitrates, acetates, carbonates, oxides and hydroxides, etc., of the element M1.

In some embodiments, in step A1, the molar ratio of Li to the sum of nickel, cobalt and manganese is (0.9-1.2) : 1.

In some embodiments, in step A1, the sintering is carried out at a temperature of 700 - 950°C under an atmosphere of air or O₂ for 10 - 20 h.

By using this primary sintering process, the first positive electrode active material with a good crystal structure can be sintered, and the uniform doping of the element M1 can be effectively performed.

In some embodiments, in step B1, the lithium salt is one or both of lithium carbonate and lithium hydroxide; the ternary precursor of the second positive electrode active material is [Ni_{X2'}Co_{Y2},Mn_{Z2'}](OH)₂, wherein 0.5 ≤ X2' < 1, 0 ≤ Y2' < 0.5, 0 ≤ Z2' < 0.5, and X2' + Y2' + Z2' = 1; and the compound containing the element M2 is one or more of sulfates, nitrates, acetates, carbonates, oxides and hydroxides, etc., of the element M2.

In some embodiments, in step B1, the molar ratio of Li to the sum of nickel, cobalt and manganese is (0.9-1.2) : 1.

**In** some embodiments, in step B1, the sintering is carried out at a temperature of 750 - 1000°C under an atmosphere of air or O₂ for 10 - 20 h.

By using this primary sintering process, the second positive electrode active material with a good crystal structure can be sintered, and the uniform doping of the element M2 can be effectively performed.

**In** some embodiments, the step A further comprises:
step A2: mixing the first positive electrode active material obtained in the step A1 with a compound containing N1, and sintering same to form a coating layer containing the element N1 on the surface of the first positive electrode active material.

In some embodiments, in step A2, the sintering is carried out at a temperature of 250 - 700°C under an atmosphere of air or O₂ for 5 - 15 h.

By using this coating and sintering process, part of the element N1 can effectively react with the impurity lithium on the surface of the first positive electrode active material to form a fast ion conductor material, such that the transporting speed of lithium ions is improved and the impurity lithium content on the surface of the material is reduced; the coating layer containing the element N1 can also be firmly and uniformly coated on the surface of the first positive electrode active material, which greatly reduces the side reaction between the first positive electrode active material and the electrolyte solution.

**In** some embodiments, in step A2, the compound containing N1 is one or more of sulfates, nitrates, acetates, carbonates, oxides and hydroxides, etc., of N1.

In some embodiments, the step B further comprises:
step B2: mixing the second positive electrode active material obtained in the step B1 with a compound containing N2, and sintering same to form a coating layer containing the element N2 on the surface of the second positive electrode active material.

In some embodiments, in step B2, the sintering is carried out at a temperature of 250 - 700°C under an atmosphere of air or O₂ for 5 - 15 h.

By using this coating and sintering process, part of the element N2 can effectively react with the impurity lithium on the surface of the second positive electrode active material to form a fast ion conductor material, such that the transporting speed of lithium ions is improved and the impurity lithium content on the surface of the material is reduced; the coating layer containing the element N2 can also be firmly and uniformly coated on the surface of the second positive electrode active material, which greatly reduces the side reaction between the second positive electrode active material and the electrolyte solution.

In some embodiments, in step B2, the compound containing N2 is one or more of sulfates, nitrates, acetates, carbonates, oxides and hydroxides, etc., of N2.

In some embodiments, in steps A1, A2, B1 and B2, the mixing is performed in a coulter mixer, a high-efficiency mixer or a inclined mixer.

In addition, the secondary battery and the power consuming device of the present application will be described below with reference to the drawings as appropriate. The secondary battery may be in the form of a battery cell, may be in the form of a battery module, or may be in the form of a battery pack.

An embodiment of the present application provides a battery cell.

Typically, a battery cell comprises a positive electrode plate, a negative electrode plate, an electrolyte and a separator. During the charge/discharge of the battery, active ions are intercalated and de-intercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### [Positive electrode plate]

The positive electrode plate comprises a positive electrode current collector and a positive electrode film layer provided on at least one surface of the positive electrode current collector, the positive electrode film layer comprising the positive electrode active material of the first aspect of the present application.

As an example, the positive electrode current collector has two surfaces opposite in its own thickness direction, and the positive electrode film layer is provided on either or both of opposite surfaces of the positive electrode current collector.

**In** some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

In some embodiments, when the extension of the positive electrode plate is 0.7%, the compaction density of the positive electrode plate is ≥ 3.3 g/cc, and optionally ≥ 3.4 g/cc.

### [Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers.

In some embodiments, the negative electrode film layer may optionally comprise other auxiliary agents, such as thickener (e.g., sodium carboxymethyl cellulose (CMC-Na)), etc.

In some embodiments, the negative electrode plate can be prepared as follows: dispersing the above-mentioned components for preparing the negative electrode plate, such as negative electrode active material, conductive agent, binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application and can be selected as necessary. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the battery cell further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the battery cell may include an outer package. The outer package may be used to encapsulate the above-mentioned electrode assembly and electrolyte.

In some embodiments, the outer package of the battery cell may be a hard shell, such as a hard plastic shell, an aluminum shell, and a steel shell. The outer package of the battery cell may also be a soft bag, such as a pouch-type soft bag. The material of the soft bag may be plastics, examples of which may be polypropylene, polybutylene terephthalate, polybutylene succinate, etc.

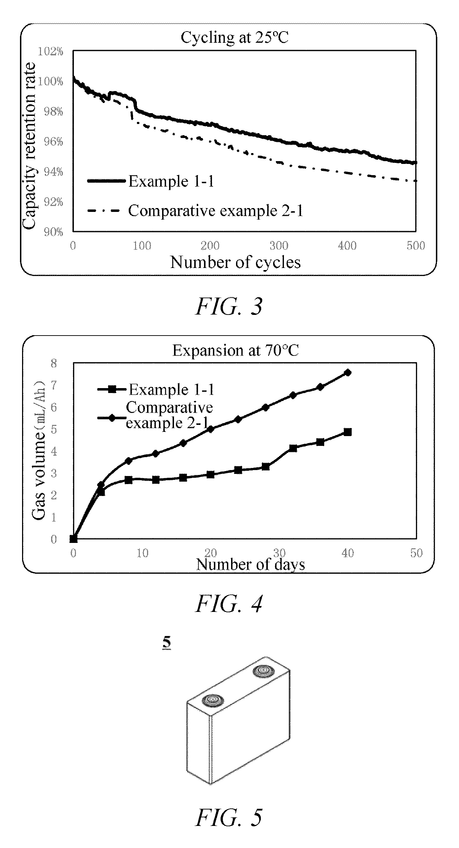

In the present application, the shape of the battery cell is not particularly limited and may be a cylindrical shape, a square shape, or any other shape. For example, Fig. 5 shows a battery cell 5 with a square structure as an example.

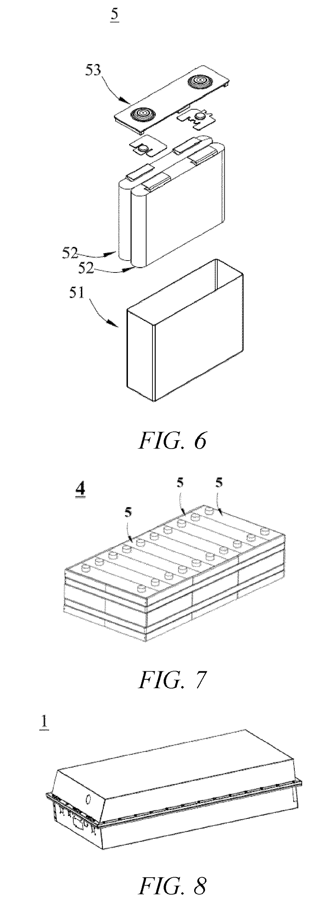

In some embodiments, referring to Fig. 6, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the battery cells 5 may be one or more, and may be selected by those skilled in the art according to the specific and actual requirements.

In some embodiments, the battery cell can be assembled into a battery module, and the number of the battery cells contained in the battery module may be one or more, and the specific number may be selected by those skilled in the art according to the application and capacity of the battery module.

Fig. 7 shows a battery module 4 as an example. Referring to Fig. 7, in the battery module 4, a plurality of battery cells 5 may be arranged sequentially along a length direction of the battery module 4. Apparently, the secondary batteries may also be arranged in any other manner. Furthermore, the plurality of battery cells 5 may be fixed by fasteners.

Optionally, the battery module 4 may further comprise a housing with an accommodating space, and the plurality of battery cells 5 are accommodated in the accommodating space.

In some embodiments, the above-mentioned battery module may be further assembled into a battery pack, the number of the battery modules contained in the battery pack may be one or more, and the specific number can be selected by those skilled in the art according to the application and capacity of the battery pack.

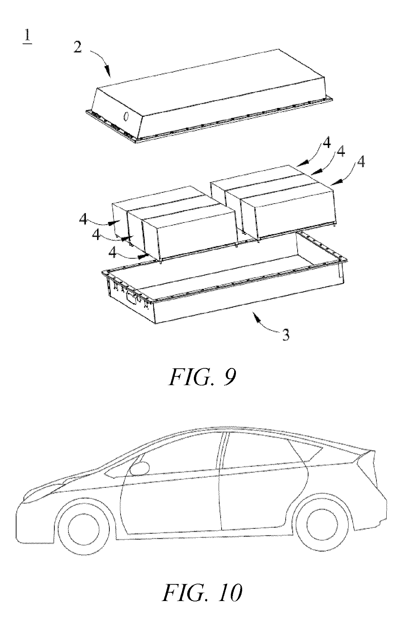

Figs. 8 and 9 show a battery pack 1 as an example. Referring to Figs. 8 and 9, the battery pack 1 may comprise a battery box and a plurality of battery modules 4 arranged in the battery box. The battery box comprises an upper box body 2 and a lower box body 3, wherein the upper box body 2 may cover the lower box body 3 to form a closed space for accommodating the battery modules 4. The plurality of the battery modules 4 may be arranged in the battery box in any manner.

In addition, the present application further provides a power consuming device, including the secondary battery provided in the present application. The secondary battery may be used as a power supply of the power consuming device, or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

For the power consuming device, the secondary battery can be selected according to the usage requirements thereof.

Fig. 10 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a battery cell used as a power source.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products.

### Example 1-1

step A: preparation of first positive electrode active material
step A1: lithium hydroxide, a ternary precursor of the first positive electrode active material [Ni_{0.90}Co_{0.05}Mn_{0.05}](OH)₂ and ZrO₂ were mixed in a coulter mixer, wherein the average particle size Dv₅₀ of the ternary precursor of the first positive electrode active material was 10 µm, the molar ratio of lithium to the sum of nickel, cobalt and manganese was 1.01, and the doping amount of Zr was 5000 ppm. The mixed material was put into a kiln and sintered at a temperature of 700°C under an atmosphere of O₂ for 20 h, so as to obtain the first positive electrode active material Li_{1.01}[Ni_{0.895}Co_{0.050}Mn_{0.050}Zr_{0.005}]O₂,
step A2: the first positive electrode active material was mixed with H₃BO₃ in the coulter mixer, wherein the coating amount of B is 1000 ppm, the mixed material was put into the kiln and sintered at a temperature of 250°C under an atmosphere of O₂ for 15 h, so as to form a coating layer containing B on the surface of the first positive electrode active material; the average particle size Dv₅₀ of the first positive electrode active material having the coating layer was 10 µm, and the volume particle size distribution span (Dv₉₀ - Dv₁₀)/Dv₅₀ was 1.3;
step B: preparation of second positive electrode active material
step B1: lithium hydroxide, a ternary precursor of the second positive electrode active material [Ni_{0.92}Co_{0.05}Mn_{0.03}](OH)₂ and TiO₂ were mixed in a coulter mixer, wherein the average particle size Dv₅₀ of the ternary precursor of the second positive electrode active material was 3 µm, the molar ratio of lithium to the sum of nickel, cobalt and manganese was 1.01, and the doping amount of Ti was 5000 ppm. The mixed material was put into a kiln and sintered at a temperature of 750°C under an atmosphere of O₂ for 20 h, so as to obtain the second positive electrode active material Li_{1.01}[Ni_{0.91}Co_{0.05}Mn_{0.03}Ti_{0.01}]O₂,
step B2: the second positive electrode active material was mixed with H₃BO₃ in the coulter mixer, wherein the coating amount of B was 1000 ppm, the mixed material was put into the kiln and sintered at a temperature of 250°C under an atmosphere of O₂ for 15 h, so as to form a coating layer containing B on the surface of the second positive electrode active material; the average particle size Dv₅₀ of the second positive electrode active material having the coating layer was 3 µm, and the volume particle size distribution span (Dv₉₀ - Dv₁₀)/Dv₅₀ was 1.0; and
step C: the first positive electrode active material having the coating layer and the second positive electrode active material having the coating later were mixed at a ratio of 7 : 3, so as to obtain the positive electrode active material.

### Example 1-2 to Example 1-3

The preparation of the positive electrode active material referred to Example 1-1 as a whole, except that
in step A1, the ternary precursor of the first positive electrode active material was [Ni_{0.50}Co_{0.30}Mn_{0.20}](OH)₂, [Ni_{0.80}Co_{0.10}Mn_{0.10}](OH)₂, respectively, so as to obtain the first positive electrode active material Li_{1.01}[Ni_{0.497}CO_{0.298}Mn_{0.200}Zr_{0.005}]O₂ and Li_{1.01}[Ni_{0.796}Co_{0.0995}Mn_{0.0995}Zr_{0.005}]O₂, respectively; and
in step B1, the ternary precursor of the second positive electrode active material was [Ni_{0.90}Co_{0.05}Mn_{0.05}](OH)₂, respectively, so as to obtain the second positive electrode active material Li_{1.01}[Ni_{0.891}Co_{0.0495}Mn_{0.0495}Ti_{0.01}]O₂, respectively.

### Comparative example 1-1

The preparation of the positive electrode active material referred to Example 1-1 as a whole, except that in step B1, the ternary precursor of the second positive electrode active material was [Ni_{0.90}Co_{0.05}Mn_{0.05}](OH)₂, so as to obtain the second positive electrode active material Li_{1.01}[Ni_{0.891}Co_{0.0495}Mn_{0.0495}Ti_{0.01}]O₂.

### Comparative example 1-2

The preparation of the positive electrode active material referred to Example 1-1 as a whole, except that in step A1, the ternary precursor of the first positive electrode active material was [Ni_{0.50}Co_{0.30}Mn_{0.20}](OH)₂, so as to obtain the first positive electrode active material Li_{1.01}[Ni_{0.497}Co_{0.298}Mn_{0.200}Zr_{0.005}]O₂.

### Example 2-1 to Example 2-4 and Comparative example 2-1

The preparation of the positive electrode active material referred to Example 1-1 as a whole, except that in step C, the mixing ratio of the first positive electrode active material having the coating layer to the second positive electrode active material having the coating layer was 5 : 5, 6 : 4, 9 : 1, 4 : 6, and 10 : 0, respectively.

### Example 3-1 to Example 3-4

The preparation of the positive electrode active material referred to Example 1-1 as a whole, except that in step A1, the average particle size Dv₅₀ of the ternary precursor of the first positive electrode active material was 6 µm, 20 µm, 5 µm and 22 µm, respectively, so as to obtain the first positive electrode active material having the coating layer with an average particle size Dv₅₀ of 6 µm, 20 µm, 5 µm and 22 µm, respectively.

### Example 3-5 to Example 3-8

The preparation of the positive electrode active material referred to Example 1-1 as a whole, except that in step B1, the average particle size Dv₅₀ of the ternary precursor of the second positive electrode active material was 2 µm, 5 µm, 1 µm and 6 µm, respectively, so as to obtain the second positive electrode active material having the coating layer with an average particle size Dv₅₀ of 2 µm, 5 µm, 1 µm and 6 µm, respectively.

### Example 3-9 to Example 3-10

The preparation of positive electrode active material referred to Example 1-1 as a whole, except in step A1, by adjusting the volume distribution span (Dv₉₀ - Dv₁₀)/Dv₅₀ of the precursor of the first positive electrode active material to be 0.5 and 0.4, respectively, and keeping the average particle size Dv₅₀ unchanged, the first positive electrode active material having the coating layer was obtained in step A2, its volume particle size distribution span (Dv₉₀ - Dv₁₀)/Dv₅₀ was 0.5 and 0.4, respectively.

### Example 3-11 to Example 3-12

The preparation of positive electrode active material referred to Example 1-1 as a whole, except in step B1, by adjusting the volume distribution span (Dv₉₀ - Dv₁₀)/Dv₅₀ of the precursor of the second positive electrode active material to be 0.5 and 0.4, respectively, and keeping the average particle size Dv₅₀ unchanged, the second positive electrode active material having the coating layer was obtained in step B2, its volume particle size distribution span (Dv₉₀ - Dv₁₀)/Dv₅₀ was 0.5 and 0.4, respectively.

### Example 4-1 to Example 4-3

The preparation of the positive electrode active material referred to Example 1-1 as a whole, except that in step A1, the doping amount of Zr was 500 ppm, 1000 ppm and 7000 ppm, respectively.

### Example 4-4 to Example 4-6

The preparation of the positive electrode active material referred to Example 1-1 as a whole, except that in step A1, the ZrO₂ was replaced with WO₃, Nb₂O₅ and a mixture of WO₃with ZrO₂ (in which the doping amount of W and Zr was each 2500 ppm), respectively.

### Example 4-7 to Example 4-9

The preparation of the positive electrode active material referred to Example 1-1 as a whole, except that in step B1, the doping amount of Ti was 500 ppm, 1000 ppm and 7000 ppm, respectively.

### Example 4-10 to Example 4-12

The preparation of the positive electrode active material referred to Example 1-1 as a whole, except that in step B1, the TiO₂ was replaced with WO₃, Nb₂O₅ and a mixture of WO₃with ZrO₂ (in which the doping amount of W and Zr was each 2500 ppm), respectively.

### Example 5-1 to Example 5-2

The preparation of the positive electrode active material referred to Example 1-1 as a whole, except that in steps A2 and B2, the H₃BO₃ was replaced with Al₂O₃ and Co(OH)₂, respectively.

### Example 5-3 to Example 5-5

The preparation of the positive electrode active material referred to Example 1-1 as a whole, except that in steps A2 and B2, the coating amount of B was 500 ppm, 15000 ppm and 20000 ppm, respectively.

### Example 6-1 to Example 6-2

The preparation of the positive electrode active material referred to Example 1-1 as a whole, except that in step A1, the sintering temperature was 800°C and 950°C, respectively, and the sintering time was 20 h and 10 h, respectively.

### Example 6-3 to Example 6-4

The preparation of the positive electrode active material referred to Example 1-1 as a whole, except that in step B1, the sintering temperature was 900°C and 1000°C, respectively, and the sintering time was 20 h and 10 h, respectively.

### Example 6-5 to Example 6-6

The preparation of the positive electrode active material referred to Example 1-1 as a whole, except that in step A2, the sintering temperature was 400°C and 700°C, respectively, and the sintering time was 10 h and 5 h, respectively.

### Example 6-7 to Example 6-8

The preparation of the positive electrode active material referred to Example 1-1 as a whole, except that in step B2, the sintering temperature was 400°C and 700°C, respectively, and the sintering time was 10 h and 5 h, respectively.

### Test method

### 1. Volume distribution particle size

The test method of volume distribution particle size was as follows: a device of Malvern 3000 was used by referring to the particle size distribution laser diffraction method of GB/T 19077-2016/ISO 13320:2009. A clean beaker was taken, a proper amount of a sample to be tested was added therein to an opacity of 8% - 12%, and 20 ml of deionized water was added while preforming the external ultrasound for 5 min. A particle size tester was turned on to start testing.

### 2. Preparation of button battery

The positive electrode active material, PVDF, and conductive carbon were added to a certain amount of NMP (with an addition ratio of 90 : 5 : 5), and stirred in a drying room to make a slurry. The above slurry was coated on an aluminum foil, dried, and cold pressed to make a positive electrode plate, a lithium plate was used as a negative electrode, and an electrolyte solution was 1 mol/L of LiPF₆/(EC + DEC + DMC) (with a volume ratio of 1 : 1 : 1), and the positive electrode plate, the negative electrode and the electrolyte solution were assembled into a button battery in a button battery box.

### Test method of initial gram capacity of button battery

At 2.8 - 4.3 V, the button battery was charged at 0.1 C to 4.3 V, then charged at a constant voltage of 4.3 V until the current was ≤ 0.05 mA, allowed to stand for 2 min, with the charge capacity at this moment being recorded as C0; then discharged at 0.1 C to 2.8 V, and the discharge capacity at this moment was the initial gram capacity, recorded as D0.

### 3. Preparation of full battery

The positive electrode active material, a conductive agent of acetylene black, and a binder of polyvinylidene fluoride (PVDF) were fully stirred and uniformly mixed in a solvent system of N-methylpyrrolidone at a weight ratio of 96 : 2 : 2, the mixture was then coated on an aluminum foil, dried and cold pressed to obtain a positive electrode plate. A negative electrode active material of synthetic graphite, hard carbon, a conductive agent of acetylene black, a binder of butadiene styrene rubber (SBR) and a thickening agent of sodium carbon methyl cellulose (CMC) were fully stirred and uniformly mixed in a solvent system of deionized water at a weight ratio of 90 : 5 : 2 : 2 : 1, and the mixture was coated on a copper foil, dried and cold pressed to obtain a negative electrode plate. A PE porous polymer film was used as a separator. The positive electrode plate, the separator and the negative electrode plate were stacked in sequence, such that the separator was arranged between the positive electrode and the negative electrode to provide the function of isolation, and were wound to obtain a bare cell. The bare cell was placed in an outer package, the prepared basic electrolyte solution, that is, 1 mol/L of LiPF₆/(EC + EMC + DMC) (with a volume ratio of 1 : 1 : 1) was injected, and encapsulated to obtain a full battery.

Test method of initial gram capacity of full battery:
The full battery was allowed to stand at a constant temperature environment of 25°C for 5 min, discharged at 1/3 C to 2.8 V, and allowed to stand for 5 min; charged at 1/3 C to 4.25 V, then charged at a constant voltage of 4.25 V until the current was ≤ 0.05 mA, and allowed to stand for 5 min, with the charge capacity at this moment being recorded as C₀; then discharged at 1/3 C to 2.8 V, and the discharge capacity at this moment was the initial gram capacity, recorded as D₀.

Test method of cycling performance of full battery at 25°C:
In a constant temperature environment of 25°C, at 2.8 - 4.25 V, the full battery was charged at 1 C to 4.25 V, then charged at a constant voltage of 4.25 V until the current was ≤ 0.05 mA, and allowed to stand for 5 min; discharged at 1 C to 2.8 V, with the capacity being D0. The previous process was repeated, and the capacity Dₙ (n = 0, 1, 2......) was recorded to calculate the capacity retention rate after 500 cycles: D₅₀₀/D₀ × 100%.

Test method of expansion of full battery at 70°C

The full battery was stored at 70°C and 100% SOC, the cell OCV, IMP, volume (tested by a drainage method) were tested before, after and during storage, the residual capacity and reversible capacity of the cell were tested at the end of storage. The full battery was taken out of a furnace every 48 h and allowed to stand for 1 h to test OCV and IMP, then cooled to room temperature to test the cell volume by using the drainage method. The test was finished after 40 days of storage, or the storage was stopped when the volume expansion exceeds 50%. The protection voltage range was: 2.7 - 4.3 V, and the nominal capacity was 2.25 Ah.

### 4. Test method of compaction density of positive electrode plate

The positive electrode active material was fed into a 5 L stirred tank, and then the conductive agent of acetylene black (SP) and the binder of polyvinylidene fluoride (PVDF) were added and premixed for 30 min. Finally, the solvent of N-methylpyrrolidone (NMP) was added and stirred rapidly under a vacuum condition to form a slurry. The mass ratio of the positive electrode active material : acetylene black : polyvinylidene fluoride = 96 : 2 : 2, and the solid content of the slurry was 70% by weight. The slurry was uniformly coated on both sides of an aluminum foil with a thickness of 12 µm, and the coated electrode plate was dried in an oven at 100 - 130°C for half an hour and then taken out. The loading amount of the positive electrode active material on the electrode plate was 21.5 g/cm². The taken-out positive electrode plate was cold pressed by a roller to test the data of the compaction density and the extension rate in a length direction.

The compaction density PD of the positive electrode plate was calculated by the formula PD = M/(d × A). In the formula, M was the mass of a small disc with a diameter of 40 mm cut from the positive electrode plate, and the average value was obtained by weighing same 10 times; d was the thickness of the positive electrode plate, and the average value was obtained by measuring the thickness 10 times; and A was the area of the small disc with a diameter of 40 mm.

The extension rate in the length direction of the electrode plate after cold pressing was calculated by the formula ΔEL% = (L2 - L1)/L1 × 100%. In the formula, L1 was the distance between marks before cold pressing, which was 1000 mm, and L2 was the distance between marks after cold pressing. The mark was formed by: in the central area of the electrode plate, three 1000 mm long line segments extending in the length direction of the electrode plate were taken respectively at different positions in the width direction of the electrode plate, and the two end points of the line segments were marked. L2 was recorded as the average value of the measured distance between the two end points of each line segment after cold pressing.

The compaction density of the electrode plate at 0.7% extension was taken as the compaction density of the positive electrode plate in the present application.

The above Examples and Comparative examples were tested respectively according to the above processes, and the specific values were shown in Table 1 - Table 6.

**Table 1. Effect of the nickel content difference (X2 - X1) between the substrates of the second positive electrode active material and the first positive electrode active material on battery performance**

| Examples | X2 - X1 | Performance of secondary battery | | | | |
|---|---|---|---|---|---|---|
| | | Compaction density of electrode plate @ 0.7% extension (g/cc) | Capacity of button battery at 0.1 C (mAh/g) | Capacity of full battery at 1/3 C (mAh/g) | Capacity retention rate after cycling at 25°C for 500 cycles (%) | Expansion @ 70°C after 40 days (mL/Ah) |
| Example 1-1 | 0.02 | 3.62 | 227.3 | 215.3 | 94.6 | 4.87 |
| Example 1-2 | 0.4 | 3.64 | 197.2 | 186.5 | 96.9 | 2.89 |
| Example 1-3 | 0.1 | 3.62 | 212.1 | 203.3 | 95.5 | 3.98 |
| Comparative example 1-1 | 0 | 3.61 | 225.9 | 214.1 | 94.8 | 4.56 |
| Comparative example 1-2 | 0.42 | 3.61 | 198.6 | 187.1 | 96.1 | 3.01 |

Comparing Examples 1-1 to 1-3 with Comparative examples 1-1 to 1-2, when the Ni content difference X2 - X1 between the substrates of the first positive electrode active material and the second positive electrode active material satisfied 0 < X2 - X1 ≤ 0.4, the secondary batteries all had good overall performance; when the Ni content difference X2 - X1 was less than or equal to 0 or exceeds 0.4, the gram capacity or cycling performance and/or expansion @ 70°C after 40 days of the secondary battery would be deteriorated.

**Table 2. Effect of the weight ratio of the first positive electrode active material to the second positive electrode active material on battery performance**

| Examples | Weight ratio of first positive electrode active material to second positive electrode active material | Performance of secondary battery | | | | |
|---|---|---|---|---|---|---|
| | | Compaction density of electrode plate @ 0.7% extension (g/cc) | Capacity of button battery at 0.1 C (mAh/g) | Capacity of full battery at 1/3 C (mAh/g) | Capacity retention rate after cycling at 25°C for 500 cycles (%) | Expansion @ 70°C after 40 days (mL/Ah) |
| Example 1-1 | 7 : 3 | 3.62 | 227.3 | 215.3 | 94.6 | 4.87 |
| Example 2-1 | 5 : 5 | 3.51 | 227.5 | 215.1 | 95.0 | 4.34 |
| Example 2-2 | 6 : 4 | 3.60 | 227.4 | 215.2 | 94.8 | 4.54 |
| Example 2-3 | 9 : 1 | 3.55 | 227.3 | 215.2 | 94.3 | 6.54 |
| Example 2-4 | 4 : 6 | 3.43 | 227.5 | 215.1 | 95.1 | 4.11 |
| Comparative example 2-1 | 10 : 0 | 3.41 | 227.2 | 215.3 | 93.4 | 7.56 |

Comparing Example 1-1 and Examples 2-1 to 2-3 with Example 2-4 and Comparative example 2-1, when the weight ratio of the first positive electrode active material to the second positive electrode active material was above 5 : 5, the compaction density of the positive electrode plate was high, and the secondary battery has good overall performance. When the weight ratio of the first positive electrode active material to the second positive electrode active material was 6 : 4 - 9 : 1, the compaction density of the positive electrode plate was further improved; when the weight of the first active positive electrode material was lower than the weight of the second active material, the compaction density of the positive electrode plate was significantly reduced, as shown in Example 2-4; when there was only the first positive electrode active material, the compaction density of the electrode plate was significantly reduced, and the cycling and storage expansion performances of the secondary battery were both deteriorated, as shown in Comparative example 2-1. In addition, it could be clearly seen from Fig. 3 and Fig. 4 that, compared with Comparative example 2-1, the cycling and storage expansion performances of Example 1-1 were significantly improved.

**Table 3. Effect of Dv₅₀ and (Dv₉₀ - Dv₁₀)/Dv₅₀ of first positive electrode active material and second positive electrode active material on battery performance**

| Examples | First positive electrode active material | | Second positive electrode active material | | Performance of secondary battery | | | | |
|---|---|---|---|---|---|---|---|---|---|
| | Dv₅₀ (µm) | (Dv₉₀ - Dv₁₀)/Dv₅₀ | Dv₅₀ (µm) | (Dv₉₀ - Dv₁₀)/Dv₅₀ | Compaction density of electrode plate @ 0.7% extension (g/cc) | Capacity of button battery at 0.1 C (mAh/g) | Capacity of full battery at 1/3 C (mAh/g) | Capacity retention rate after cycling at 25°C for 500 cycles (%) | Expansion @ 70°C after 40 days (mL/Ah) |
| Example 1-1 | 10 | 1.3 | 3 | 1.0 | 3.62 | 227.3 | 215.3 | 94.6 | 4.87 |
| Example 3-1 | 6 | 1.3 | 3 | 1.0 | 3.51 | 228.8 | 216.1 | 94.1 | 5.68 |
| Example 3-2 | 20 | 1.3 | 3 | 1.0 | 3.64 | 225.9 | 214.2 | 94.7 | 4.82 |
| Example 3-3 | 5 | 1.3 | 3 | 1.0 | 3.40 | 230.1 | 217.6 | 92.2 | 6.89 |
| Example 3-4 | 22 | 1.3 | 3 | 1.0 | 3.62 | 223.5 | 211.4 | 93.2 | 4.98 |
| Example 3-5 | 10 | 1.3 | 2 | 1.0 | 3.63 | 228.2 | 215.7 | 94.2 | 5.02 |
| Example 3-6 | 10 | 1.3 | 5 | 1.0 | 3.61 | 226.4 | 214.7 | 94.7 | 4.79 |
| Example 3-7 | 10 | 1.3 | 1 | 1.0 | 3.47 | 229.2 | 216.4 | 92.5 | 6.54 |
| Example 3-8 | 10 | 1.3 | 6 | 1.0 | 3.58 | 225.1 | 213.2 | 94.2 | 5.12 |
| Example 3-9 | 10 | 0.5 | 3 | 1.0 | 3.42 | 227.1 | 215.0 | 94.3 | 4.98 |
| Example 3-10 | 10 | 0.4 | 3 | 1.0 | 3.29 | 225.8 | 214.3 | 94.0 | 5.09 |
| Example 3-11 | 10 | 1.3 | 3 | 0.5 | 3.44 | 226.7 | 214.5 | 94.1 | 4.97 |
| Example 3-12 | 10 | 1.3 | 3 | 0.4 | 3.37 | 226.3 | 214.2 | 94.2 | 4.89 |

Comparing Example 1-1 and Examples 3-1 to 3-4, when the average particle size Dv₅₀ of the first positive electrode active material was in a range of 6 - 20 µm, the secondary batteries all had good overall performance; when the average particle size Dv₅₀ of the first positive electrode active material was less than 6 µm, the compaction density of the positive electrode plate was significantly reduced, and the cycling and storage gas generation performances of the secondary battery were also significantly reduced, as shown in Example 3-3; when the average particle size Dv₅₀ of the first positive electrode active material was greater than 20 µm, the capacity of the secondary battery was reduced, and the cycling and storage gas generation performances were also reduced, as shown in Example 3-4.

Comparing Example 1-1 and Examples 3-5 to 3-8, when the average particle size Dv₅₀ of the second positive electrode active material was in the range of 2 - 5 µm, the secondary batteries all had good overall performance; when the average particle size Dv₅₀ of the second positive electrode active material was less than 2 µm, the compaction density of the positive electrode plate was significantly reduced, and the cycling and storage gas generation performances of the secondary battery were also significantly reduced, as shown in Example 3-7; when the average particle size Dv50 of the second positive electrode active material was greater than 5 µm, the capacity of the secondary battery was reduced, and the cycling and storage gas generation performances were also reduced, as shown in Example 3-8.

Comparing Example 1-1 and Examples 3-9 to 3-12, when the particle volume distribution span (Dv₉₀ - Dv₁₀)/Dv₅₀ of the first positive electrode active material or the second positive electrode active material was greater than or equal to 0.5, the overall performance of the secondary battery was good, and when (Dv₉₀ - Dv₁₀)/Dv₅₀ was less than 0.5, the compaction density of the positive electrode plate was significantly reduced.

**Table 4. Effect of doping element and doping amount on battery performance**

| Examples | First positive electrode active material | | Second positive electrode active material | | Performance of secondary battery | | | | |
|---|---|---|---|---|---|---|---|---|---|
| | Doping element | Doping amount (ppm) | Doping element | Doping amount (ppm) | Compaction density of electrode plate @ 0.7% extension (g/cc) | Capacity of button battery at 0.1 C (mAh/g) | Capacity of full battery at 1/3 C (mAh/g) | Capacity retention rate after cycling at 25°C for 500 cycles (%) | Expansion @ 70°C after 40 days (mL/Ah) |
| Example 1-1 | Zr | 5000 | Ti | 5000 | 3.62 | 227.3 | 215.3 | 94.6 | 4.87 |
| Example 4-1 | Zr | 500 | Ti | 5000 | 3.61 | 228.3 | 216.2 | 94.2 | 4.93 |
| Example 4-2 | Zr | 1000 | Ti | 5000 | 3.60 | 227.9 | 215.9 | 94.4 | 4.89 |
| Example 4-3 | Zr | 7000 | Ti | 5000 | 3.61 | 226.3 | 214.2 | 94.8 | 4.81 |
| Example 4-4 | W | 5000 | Ti | 5000 | 3.61 | 227.6 | 215.4 | 94.7 | 4.92 |
| Example 4-5 | Nb | 5000 | Ti | 5000 | 3.63 | 227.1 | 215.0 | 94.5 | 4.89 |
| Example 4-6 | W, Zr | 5000 | Ti | 5000 | 3.62 | 227.2 | 215.1 | 94.8 | 4.81 |
| Example 4-7 | Zr | 5000 | Ti | 500 | 3.62 | 228.1 | 216.0 | 94.3 | 4.99 |
| Example 4-8 | Zr | 5000 | Ti | 1000 | 3.61 | 227.6 | 215.5 | 94.5 | 4.95 |
| Example 4-9 | Zr | 5000 | Ti | 7000 | 3.62 | 226.6 | 214.6 | 94.7 | 4.82 |
| Example 4-10 | Zr | 5000 | W | 5000 | 3.63 | 227.4 | 215.4 | 94.5 | 4.83 |
| Example 4-11 | Zr | 5000 | Nb | 5000 | 3.61 | 227.5 | 215.3 | 94.4 | 4.94 |
| Example 4-12 | Zr | 5000 | W, Zr | 5000 | 3.62 | 227.6 | 215.5 | 94.8 | 4.76 |

Comparing Example 1-1 and Examples 4-1 to 4-6, when the first positive electrode active material was doped with an element M1, and the doping amount of the element M1 was 500 - 7000 ppm, the secondary batteries all had good overall performance; when the doping amount of the element M1 was 1000 - 5000 ppm, the gram capacity or cycling performance and/or expansion @ 70°C after 40 days of the secondary battery were further improved.

Comparing Example 1-1 and Examples 4-7 to 4-12, when the second positive electrode active material was doped with an element M2, and the doping amount of the element M2 was in the range of 500 - 7000 ppm, the secondary batteries all had good overall performance; when the doping amount of the element M2 was 1000 - 5000 ppm, the gram capacity or cycling performance and/or expansion @ 70°C after 40 days of the secondary battery were further improved.

**Table 5. Effect of coating element and coating amount on battery performance**

| Examples | First positive electrode active material | | Second positive electrode active material | | Performance of secondary battery | | | | |
|---|---|---|---|---|---|---|---|---|---|
| | Coating element | Coating amount (ppm) | Coating element | Coating amount (ppm) | Compaction density of electrode plate @ 0.7% extension (g/cc) | Capacity of button battery at 0.1 C (mAh/g) | Capacity of full battery at 1/3 C (mAh/g) | Capacity retention rate after cycling at 25°C for 500 cycles (%) | Expansion @ 70°C after 40 days (mL/Ah) |
| Example 1-1 | B | 1000 | B | 1000 | 3.62 | 227.3 | 215.3 | 94.6 | 4.87 |
| Example 5-1 | Al | 1000 | Al | 1000 | 3.62 | 226.6 | 214.5 | 94.7 | 4.89 |
| Example 5-2 | Co | 1000 | Co | 1000 | 3.63 | 227.7 | 215.6 | 94.8 | 4.78 |
| Example 5-3 | B | 500 | B | 500 | 3.61 | 227.5 | 215.4 | 94.2 | 5.12 |
| Example 5-4 | B | 15000 | B | 15000 | 3.62 | 226.3 | 214.3 | 94.8 | 4.76 |
| Example 5-5 | B | 20000 | B | 20000 | 3.62 | 225.3 | 213.4 | 94.9 | 4.56 |

Comparing Example 1-1 and Examples 5-1 to 5-5, when the first positive electrode active material and the second positive electrode active material were coated with a coating layer containing an element N1 and a coating layer containing an element N2, respectively, and when the coating amount of the element N1 or element N2 was in the range of 500 - 20000 ppm, the secondary batteries all had good overall performance; when the coating amount of the element N1 or the element N2 was 1000 - 15000 ppm, the gram capacity or cycling performance and/or expansion @ 70°C after 40 days of the secondary battery were further improved.

**Table 6. Effect of sintering temperature and sintering time in each step on battery performance**

| Examp les | First positive electrode active material | | | | Second positive electrode active material | | | | Performance of secondary battery | | | | |
|---|---|---|---|---|---|---|---|---|---|---|---|---|---|
| | A1 Sintering temperatur e °C | A1 Sinter ing time h | A2 Sintering temperatur e °C | A2 Sinter ing time h | B1 Sintering temperatur e °C | B1 Sinter ing time h | B2 Sintering temperatur e °C | B2 Sinter ing time h | Compac tion density of electrod e plate @ 0.7% extensio n (g/cc) | Capac ity of butto n batter y at 0.1 C (mAh /g) | Capac ity of full batter y at 1/3 C (mAh /g) | Capac ity retenti on rate after cyclin g at 25°C for 500 cycles (%) | Expansi on @ 70°C after 40 days (mL/Ah ) |
| Examp le 1-1 | 700 | 20 | 250 | 15 | 750 | 20 | 250 | 15 | 3.62 | 227.3 | 215.3 | 94.6 | 4.87 |
| Examp le 6-1 | 800 | 20 | 250 | 15 | 750 | 20 | 250 | 15 | 3.64 | 226.3 | 214.3 | 94.7 | 4.76 |
| Examp le 6-2 | 950 | 10 | 250 | 15 | 750 | 20 | 250 | 15 | 3.65 | 225.4 | 213.6 | 94.5 | 4.67 |
| Examp le 6-3 | 700 | 20 | 250 | 15 | 900 | 20 | 250 | 15 | 3.63 | 226.5 | 214.7 | 94.7 | 4.69 |
| Examp le 6-4 | 700 | 20 | 250 | 15 | 1000 | 10 | 250 | 15 | 3.64 | 225.9 | 213.9 | 94.5 | 4.89 |
| Examp le 6-5 | 700 | 20 | 400 | 10 | 750 | 20 | 250 | 15 | 3.63 | 226.8 | 214.8 | 94.6 | 4.88 |
| Examp le 6-6 | 700 | 20 | 700 | 5 | 750 | 20 | 250 | 15 | 3.63 | 226.1 | 214.2 | 94.3 | 4.81 |
| Examp le 6-7 | 700 | 20 | 250 | 15 | 750 | 20 | 400 | 10 | 3.62 | 227.1 | 215.2 | 94.7 | 4.83 |
| Examp le 6-8 | 700 | 20 | 250 | 15 | 750 | 20 | 700 | 5 | 3.63 | 226.4 | 214.5 | 94.4 | 4.82 |

Comparing Example 1-1 and Examples 6-1 to 6-8, the secondary batteries obtained by using the synthesis process of the method of the present invention all had good overall performance.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A positive electrode active material, comprising:
a first positive electrode active material comprising a substrate of formula (I), wherein the substrate is doped with an element M1:
Li_{A1}[Ni_{X1}Co_{Y1}Mn_{Z1}]O₂ (I),
in formula (I), 0.5 ≤ X1 < 1, 0 ≤ Y1 < 0.5, 0 ≤ Z1 < 0.5, 0.9 < A1 < 1.2, and X1 + Y1 + Z1 = 1, the element M1 is selected from at least one of Ti, Zr, Al, Sb, W, Sr, Nb, Mo, Ca, K, Na, Mg, Si, Te, Cr, V, and Y; and
a second positive electrode active material comprising a substrate of formula (II), wherein the substrate is doped with an element M2:
Li_{A2}[Ni_{X2}Co_{Y2}Mn_{Z2}]O₂ (II),
in formula (II), 0.5 ≤ X2 < 1, 0 ≤ Y2 < 0.5, 0 ≤ Z2 < 0.5, 0.9 < A2 < 1.2, and X2 + Y2 + Z2 = 1, the element M2 is selected from at least one of Ti, Zr, Al, Sb, W, Sr, Nb, Mo, Ca, K, Na, Mg, Si, Te, Cr, V, and Y;
the average particle size Dv₅₀ of the first positive electrode active material is greater than that of the second positive electrode active material, wherein 0 < X2 - X1 ≤ 0.4, and optionally 0 < X2 - X1 ≤ 0.1.

2. The positive electrode active material according to claim 1, wherein 0.9 ≤ X2 < 1.

3. The positive electrode active material according to claim 1 or 2, wherein the weight ratio of the first positive electrode active material to the second positive electrode active material is above 5 : 5, and optionally 6 : 4 - 9 : 1.

4. The positive electrode active material according to any one of claims 1 to 3, wherein the first positive electrode active material is a secondary particle, and the volume particle size distribution span (Dv₉₀ - Dv₁₀)/Dv₅₀ ≥ 0.5, and optionally (Dv₉₀ - Dv₁₀)/Dv₅₀ ≥ 1.0.

5. The positive electrode active material according to any one of claims 1 to 4, wherein the first positive electrode active material has an average particle size Dv₅₀ of 6 - 20 µm.

6. The positive electrode active material according to any one of claims 1 to 5, wherein the second positive electrode active material is a secondary particle and/or a primary particle, and optionally a primary particle, the volume particle size distribution span (Dv₉₀ - Dv₁₀)/Dv₅₀ ≥ 0.5, and optionally (Dv₉₀ - Dv₁₀)/Dv₅₀ ≥ 1.0.

7. The positive electrode active material according to any one of claims 1 to 6, wherein the second positive electrode active material has an average particle size Dv₅₀ of 2 - 5 µm.

8. The positive electrode active material according to any one of claims 1 to 7, wherein in the first positive electrode active material, the doping amount of the element M1 is 500 - 7000 ppm, and optionally 1000 - 5000 ppm, based on the total weight of the first positive electrode active material.

9. The positive electrode active material according to any one of claims 1 to 8, wherein in the second positive electrode active material, the doping amount of the element M2 is 500 - 7000 ppm, and optionally 1000 - 5000 ppm, based on the total weight of the second positive electrode active material.

10. The positive electrode active material according to any one of claims 1 to 9, wherein the surface of the first positive electrode active material further has a coating layer, the coating layer contains an element N1, wherein the element N1 is selected from at least one of Al, Co, Mn, B, La, Sr, P, F, Zr, Ti, and W.

11. The positive electrode active material according to claim 10, wherein the coating amount of the element N1 is 500 - 20000 ppm, and optionally 1000 - 15000 ppm, based on the total weight of the first positive electrode active material.

12. The positive electrode active material according to any one of claims 1 to 11, wherein the surface of the second positive electrode active material further has a coating layer, the coating layer contains an element N2, wherein the element N2 is selected from at least one of Al, Co, Mn, B, La, Sr, P, F, Zr, Ti, and W.

13. The positive electrode active material according to claim 12, wherein the coating amount of the element N2 is 500 - 20000 ppm, and optionally 1000 - 15000 ppm, based on the total weight of the second positive electrode active material.

14. A method for preparing a positive electrode active material, comprising the steps of:
step A: preparation of a first positive electrode active material, comprising:
step A1: mixing a lithium salt, a ternary precursor of a first positive electrode active material and a compound containing an element M1, and sintering same to obtain the first positive electrode active material;
step B: preparation of a second positive electrode active material, comprising:
step B1: mixing a lithium salt, a ternary precursor of a second positive electrode active material and a compound containing an element M2, and sintering same to obtain the second positive electrode active material; and
step C: mixing the first positive electrode active material and the second positive electrode active material to obtain the positive electrode active material;
wherein the first positive electrode active material comprises a substrate of formula (I), and the substrate is doped with the element M1:
Li_{A1}[Ni_{X1}Co_{Y1}Mn_{Z1}]O₂ (I),
in formula (I), 0.5 ≤ X1 < 1, 0 ≤ Y1 < 0.5, 0 ≤ Z1 < 0.5, 0.9 < A1 < 1.2, and X1 + Y1 + Z1 = 1, the element M1 is selected from at least one of Ti, Zr, Al, Sb, W, Sr, Nb, Mo, Ca, K, Na, Mg, Si, Te, Cr, V, and Y;
the second positive electrode active material comprises a substrate of formula (II), and the substrate is doped with an element M2:
Li_{A2}[Ni_{X2}Co_{Y2}Mn_{Z2}]O₂ (II),
in formula (II), 0.5 ≤ X2 < 1, 0 ≤ Y2 < 0.5, 0 ≤ Z2 < 0.5, 0.9 < A2 < 1.2, and X2 + Y2 + Z2 = 1, the element M2 is selected from at least one of Ti, Zr, Al, Sb, W, Sr, Nb, Mo, Ca, K, Na, Mg, Si, Te, Cr, V, and Y;
the average particle size Dv₅₀ of the first positive electrode active material is greater than that of the second positive electrode active material, wherein 0 < X2 - X1 ≤ 0.4, and optionally 0 < X2 - X1 ≤ 0.1.

15. The method according to claim 14, wherein in the step A1, the sintering is carried out at a temperature of 700 - 950°C under an atmosphere of air or O₂ for 10 - 20 h.

16. The method according to claim 14 or 15, wherein in the step B1, the sintering is carried out at a temperature of 750 - 1000°C under an atmosphere of air or O₂ for 10 - 20 h.

17. The method according to any one of claims 14 to 16, wherein the step A further comprises:
step A2: mixing the first positive electrode active material obtained in the step A1 with a compound containing N1, and sintering same to form a coating layer containing the element N1 on the surface of the first positive electrode active material.

18. The method according to claim 17, wherein in the step A2, the sintering is carried out at a temperature of 250 - 700°C under an atmosphere of air or O₂ for 5 - 15 h.

19. The method according to any one of claims 14 to 18, wherein the step B further comprises:
step B2: mixing the second positive electrode active material obtained in the step B1 with a compound containing N2, and sintering same to form a coating layer containing the element N2 on the surface of the second positive electrode active material.

20. The method according to claim 19, wherein in the step B2, the sintering is carried out at a temperature of 250 - 700°C under an atmosphere of air or O₂ for 5 - 15 h.

21. A secondary battery, comprising a positive electrode active material according to any one of claims 1 to 13 or a positive electrode active material prepared by a method according to any one of claims 14 to 20.

22. A power consuming device, comprising a secondary battery according to claim 21.
